(19) Europäisches Patentamt
European Patent Office
Office européen des brevets

(11) Veröffentlichungsnummer: **0 001 580**
**B1**

(12) # EUROPÄISCHE PATENTSCHRIFT

(21) Anmeldenummer: 78101040.0

(22) Anmeldetag: 30.09.78

(51) Int. Cl.³: C 08 G 8/24, C 08 L 7/00, C 08 L 9/00

(54) **Harze auf Basis von Novolaken, deren Herstellung und Verwendung als Klebrigmachungsmittel**

(30) Priorität: **13.10.77 DE 2746138**

(43) Veröffentlichungstag der Anmeldung: **02.05.79 Patentblatt 79/09**

(45) Bekanntmachung des Hinweises auf die Patenterteilung: **12.11.80 Patentblatt 80/23**

(84) Benannte Vertragsstaaten: **BE CH DE FR GB LU NL**

(56) Entgegenhaltungen:
**DE - A - 2 537 656**
**DE - B - 1 569 482**
**FR - A - 2 227 303**

(73) Patentinhaber: **BAYER AG
ZENTRALBEREICH PATENTE, MARKEN UND LIZENZEN
D - 5090 LEVERKUSEN 1, BAYERWERK (DE)**

(72) Erfinders: **Schmidt, Manfred, Dr.
Bodelschwinghstrasse 20
D - 4150 Krefeld 1 (DE)
Kempermann, Theo, Dr.
Friedrich-Schmidt-Strasse 16a
D - 5000 Köln 41 (DE)
Freitag, Dieter, Dr.
Hasenheide 10
D - 4150 Krefeld 1 (DE)
Fries, Hermann, Dr.
Am Katterbach 60
D - 5060 Bergisch Gladbach 2 (DE)
Esch, Erich
Clemens-Winkler-Strasse 7
D - 5090 Leverkusen 1 (DE)**

**EP 0 001 580 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

# Harze auf Basis von Novolaken, deren Herstellung und Verwendung als Klebrigmachungsmittel

Gegenstand der Erfindung sind Harze, erhältlich durch Umsetzung von Alkylphenol-Formaldehyd-Novolaken mit Mehrkernphenolen und Formaldehyd und/oder aliphatischen Aldehyden, deren Herstellung und Verwendung als Klebrigmachungsmittel für Elastomere.

Bei der Konfektionierung von Gummiartikeln wie Reifen, Walzen und Schläuchen müssen die aneinandergefügten einzelnen Kautschukmischungen gut haften, damit diese sich vor der endgültigen Formgebung durch Verpressen und Vulkanisieren nicht wieder voneinander lösen.

Synthesekautschuke und hochgefüllte Gummimischungen besitzen häufig keine ausreichende Konfektionsklebrigkeit, um eine genügend hohe Adhäsion der zu verklebenden Elastomerflächen bei der technischen Verarbeitung zu gewährleisten. Es ist deshalb notwendig, den Gummimischungen vor der technischen Verarbeitung ein Klebrigmachungsmittel zusetzen, das neben einem Höchstmaß an Wirkung sehr gute Verträglichkeit mit den Kautschuken und den darin eingearbeiteten Mischungsbestandteilen aufweist und keinen merklichen negativen Einfluß auf Verarbeitung, Vulkanisation, Alterung und die physikalischen Werte des Vulkanisats ausübt.

Gebräuchliche Klebrigmachungsmittel in der Gummiindustrie sind sowohl Naturharze als auch Syntheseharze in flüssiger, pastöser, meist aber fester Form. Gebräuchliche Naturharze sind Kolophonium, Cumaron- und Indenharze.

Handelsübliche Syntheseharze sind meist Harzkondensate aus Phenol, Xylol und/oder Alkylphenol mit Aldehyden oder Acetylen. Die Alkylphenol-Acetylen-Harze weisen in der Regel die beste klebrigmachende Wirkung auf.

Es wurde nunmehr gefunden, daß Harze, die durch sauer katalysierte Umsetzung eines Alkylphenol-Formaldehyd-Novolaks mit einem Mehrkernphenol und Formaldehyd und/oder einem aliphatischen Aldehyd erhältlich sind, eine deutlich höhere Klebrigkeit des Elastomers bewirken, ohne daß Verarbeitung, Alterung und physikalische Werte des Vulkanisats negativ beeinflußt werden.

Kennzeichnend für die erfindungsgemäßen Harze ist, daß das Gewichtsverhältnis der eingesetzten Alkylphenole zu dem eingesetzten Mehrkernphenol 1,5:1 bis 1:4, beträgt.

Der als Ausgangsprodukt eingesetzte Alkylphenol-Formaldehyd-Novolak kann in einer der erfindungsgemäßen Umsetzung vorgeschalteten Reaktionsstufe hergestellt werden, so daß die Gesamtreaktion als "Eintopfverfahren" durchgeführt werden kann. Dies hat, wie aus dem folgenden hervorgeht, verschiedene Vorteile.

Die Kondensation des Alkylphenols oder Alkylphenolgemisches mit Formaldehyd kann auf bekannte Weise erfolgen, wobei in Gegenwart saurer Katalysatoren ein Gemisch des Alkylphenols (oder Alkylphenolgemisches) mit der ein- bis zweifachen molaren Menge Formaldehyd — als Paraformaldehyd, Trioxan oder wäßrige Formalinlösung vorliegend — bei Temperaturen von 100—180°C und bei 1—7 atm Druck 1 bis 3 Stunden umgesetzt wird. Die Reaktion kann gleichfalls in Gegenwart von Lösungsmitteln wie Toluol, Xylol, Isobutanol oder anderen nicht oder nur teilweise mit Wasser mischbaren Lösungsmitteln ausgeführt werden, jedoch wird bevorzugt lösungsmittelfrei kondensiert.

Als Alkylphenole werden solche eingesetzt, die einen geradkettigen oder verzweigten o- oder p-ständigen Alkyl- oder Cycloalkylrest mit 3—20 Kohlenstoffatomen, vorzugsweise jedoch 4—12 Kohlenstoffatomen, aufweisen. Handelsübliche Alkylphenole können noch kleinere Anteile disubstituierter Alkylphenole enthalten. Besonders bevorzugt werden p-tert.-Butylphenol sowie ein technisches o/p-Nonylphenolgemisch mit einem Anteil an o-Isomeren von 10—20 Gew.-%.

Als saure Katalysatoren kommen organische und anorganische Säuren wie Ameisensäure, Essigsäure, Trichloressigsäure, p-Toluolsulfonsäure, Salzsäure, Phosphorsäure, Schwefelsäure oder Mischungen dieser Säuren in Betracht, die in Mengen von 0,05 bis 60 Mol-%, vorzugsweise 0,1 bis 50 Mol-%, (bezogen auf eingesetztes Alkylphenol) zugegeben werden. Besonders bevorzugt werden Ameisensäure, p-Toluolsulfonsäure, Salzsäure, Schwefelsäure sowie Phosphorsäure als saure Katalysatoren verwendet.

Der erhaltene Alkylphenol-Formaldehyd-Novolak wird in einem Lösungsmittel wie Toluol, Chlorbenzol, Xylol oder Isobutanol, vorzugsweise in Toluol oder Isobutanol, gelöst, falls dieses Lösungsmittel nicht schon während der Kondensationsreaktion des Novolaks eingesetzt wurde. Anschließend wird ein Mehrkernphenol (oder ein technisches Mehrkernphenolgemisch) zugegeben. Die Lösungsmittelmenge beträgt 20—200 Gew.-%, vorzugsweise jedoch 30—100 Gew.-%, bezogen auf eingesetztes Alkylphenol. Die Menge des verwendeten Mehrkernphenols oder technischen Mehrkernphenolgemisches beträgt 45—1000 Gew.-%, vorzugsweise jedoch 67—400 Gew.-% der eingesetzten Alkylphenolmenge.

Als Mehrkernphenole können verwendet werden:

4,4'-Dihydroxydiphenyl
2,2-Bis-(4-hydroxyphenyl)-propan = Bisphenol A
2,2-Bis-(4-hydroxyphenyl)-butan
1,1-Bis-(4-hydroxyphenyl)-cyclohexan
Bis-(4-hydroxyphenyl)-diisopropylbenzole.

Als technisches Mehrkernphenolgemisch kann beispielsweise das in etwa 90%iger Reinheit bei

der Synthese anfallende 2,2-Bis-(4-hydroxyphenyl)-propan, allgemein Bisphenol A genannt, verwendet werden. Dieses Mehrkernphenolgemisch enthält noch etwa 10 Gew.-% an isomerem Bisphenol A, Trisphenolen und 4-Hydroxyphenylindan.

Bevorzugt sei ein technisches Mehrkernphenolgemisch folgender Zusammensetzung angeführt:

30—60 Gew.-% Bisphenol A (BPA)

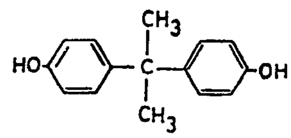

5—15 Gew.-% sog. "o,p-Bisphenol A"

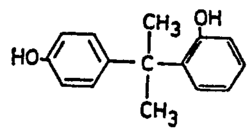

0—15 Gew.-% Phenol

5—17 Gew.-% Trisphenol

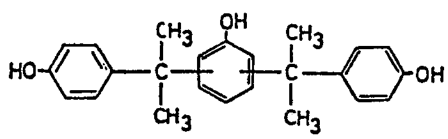

5—15 Gew.-% isomere 4-Hydroxyphenyl-chromane

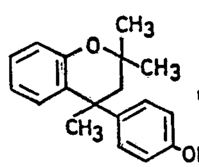

und

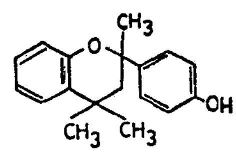

3—12 Gew.-% 4-Hydroxyphenyl-indan

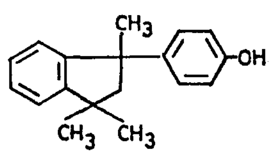

Die Lösung des Alkylphenol-Formaldehyd-Novolaks wird mit dem Mehrkernphenol oder Mehrkernphenolgemisch in bekannter Weise umgesetzt. Die Reaktionszeit beträgt bevorzugt 20—180 Min. Die Umsetzung erfolgt bevorzugt bei Temperaturen von 100—150°C.

In das Reaktionsgemisch werden 0,10—0,60 Mol, vorzugsweise jedoch 0,15 bis 0,55 Mol Aldehyd eingetragen. Als Aldehyde können Formaldehyd, beispielsweise als 30—35%-ige wäßrige Formalinlösung oder Paraformaldehyd, und/oder aliphatische Aldehyde bevorzugt mit 2 bis 4 C-Atomen wie Acetaldehyd, Propionaldehyd, Butyraldehyd, Isobutyraldehyd, Crotonaldehyd oder Mischungen dieser Aldehyde eingesetzt werden.

Sollten Gemische aus Formaldehyd und aliphatischer Aldehyde verwendet werden, so beträgt der Anteil des aliphatischen Aldehydes bis zu 0,1 Mol, bevorzugt 0,05 bis 0,08 Mol.

Das Reaktionsgemisch wird während der Zugabe beständig am Sieden gehalten.

Die Molmengen der eingesetzten Aldehyde beziehen sich auf 1 Mol phenolische OH-Gruppen des Mehrkernphenols oder Mehrkernphenolgemisches. Nach 1- bis 4-stündiger Reaktion wird zunächst Wasser durch azeotrope Destillation entfernt und anschließend erst bei Normaldruck und dann im Vakuum (bei $P_{min} = 30$ Torr) bei auf 150—230°C ansteigender Heizbadtemperatur das Lösungsmittel abdestilliert.

Das flüssige viskose Harz wird aus dem Reaktionsgefäß herausgenommen und aufgearbeitet. Ein bevorzugtes Verfahren der Harzisolierung ist die Aufarbeitung der Harzlösung nach der vorausgegangenen azeotropen Entwässerung mittels eines Schlangenrohrverdampfers, der von einem bis auf 230°C heizbaren Medium ummantelt ist.

Der Erweichungspunkt der erhaltenen Harze liegt zwischen 50°C und 130°C, vorzugsweise

zwischen 75 und 100°C. Durch Variation der zur Kondensation des Gemisches aus Alkylphenolnovolak und Mehrkernphenol oder Mehrkernphenolgemisch eingetragenen Aldehydmengen kann der Erweichungspunkt der Harze entsprechend reguliert werden, wobei durch ansteigende Aldehyddosierung der Erweichungspunkt erhöht wird. Die Harze sind gekennzeichnet durch OH-Zahlen von 250—400, vorzugsweise von 270—370, und Jodzahlen von 90—160, vorzugsweise von 110—140.

Die Harze sind ausgezeichnete Klebrigmachungsmittel für Elastomere wie Naturkautschuk (NR), Styrol-Butadien-Copolymer (SBR), Acrylnitril-Butadien-Copolymer (NBR), Polybutadiene (BR), Polychloropren (CR), Polyisopren (IR), Isobutylen-Isopren-Copolymer (IIR), Äthylen-Propylen-Terpolymere (EPDM) sowie deren Mischungen untereinander. Die Dosierung der Harze in Kautschuk beträgt 0,3—8 Gew.-%, vorzugsweise 1—6 Gew.-%, bezogen auf das Polymergewicht. Sie werden in üblicher Weise eingemischt.

Die klebrigmachende Wirkung der Harze erstreckt sich auf die verschiedensten Mischungstypen, wie Schlauchmischungen, Walzenmischungen, Reifenmischungen, Konfektionsmischungen, Preß- und Spritzmischungen, denen gegebenenfalls Füllstoffe wie Ruße, Kaolin, Kieselsäuren oder Weichmacher, wie z. B. Mineralöle oder Fettsäureester, zugemischt sein können.

Eine Beeinträchtigung der Verarbeitungseigenschaften der mit den Klebrigmacherharzen in üblicher Dosierung versetzten Gummimischungen bei Verwendung der in der Gummiindustrie üblichen Aggregate, wie Mischwalzen, Kneter, Kalander oder Extruder, konnte nicht festgestellt werden.

Die Klebrigmacherharze können ebenfalls zur Herstellung von Klebstoffen auf Basis von Kautschuk verwendet werden, die SBR, NR, EPDM, Butyl- und/oder Chlorbutylkautschuk enthalten und als Lösungsmittel- oder Emulsionsklebstoffe aufgebaut sind.

Die Erfindung wird durch folgende Beispiele näher erläutert:

### Beispiel 1

Ein Gemisch aus 450 g eines technischen o/p-Nonylphenolgemisches (Anteil an o-Isomeren: 15 Gew.-%), 108 g Paraformaldheyd, 40 g Ameisensäure und 2 g p-Toluolsulfonsäure werden bei einer Heizbadtemparatur von 170°C und bei 1 atm Druck 1 Stunde intensiv gerührt. Nach Abkühlung des Reaktionsgemisches auf 100°C werden 250 ml Toluol und 1 kg des technischen Mehrkernphenolgemisches (enthaltend 52% Bisphenol A Isomer) zugefügt. Nach halbstündiger Reaktion bei 130°C wird ein Gemisch aus 130 g 30 %iger Formalinlösung und 30 g Propionaldehyd so zudosiert, daß das Reaktionsgemisch beständig am Sieden bleibt (Zugabezeit: 15 Min.). Man läßt 2 Stunden unter Rückflußsieden und intensivem Rühren reagieren und entfernt anschließend das Wasser durch azeotrope Destillation aus dem Reaktionsgemisch. Dann wird erst bei Normaldruck und anschließend im Vakuum (bis p = 30 Torr) bei bis auf 180°C ansteigender Heizbadtemperatur das gesamte Lösungsmittel abdestilliert, das flüssige viskose Harz aus dem Reaktionsgefäß gedrückt und nach dem Erstarren gemahlen. Man erhält 1,6 kg Harz; Erweichungspunkt 77—80°C.
OH-Zahl = 315,
Jodzahl = 115.

### Beispiel 2

150 g p-tert.-Butylphenol, 300 g technisches o/p-Nonylphenolgemisch mit 15 Gew.-% o-Isomerenanteil, 120 g Paraformaldehyd und 1 g p-Toluolsulfonsäure werden 3 Stunden unter intensivem Rühren bei einer Heizbadtemperatur von 170°C erwärmt. Nach Zugabe von 170 ml Isobutanol wird 1 kg des technischen Mehrkernphenolgemisches (enthaltend 52% Bisphenol A Isomer) eingetragen. Man läßt 2 1/2 Stunden unter Rückflußsieden reagieren und gibt 175 g 30%ige Formalinlösung zu.

Nach 3 Stunden Reaktionszeit wird zunächst das Wasser azeotrop abdestilliert und anschließend erst bei Normaldruck und dann im Vakuum bei bis auf 230°C ansteigender Badtemperatur das gesamte Lösungsmittel abdestilliert. Das erhaltene Harz (1,6 kg) besitzt einen Erweichungspunkt von 87 bis 90°C; OH-Zahl = 320, Jodzahl = 120.

### Beispiel 3

600 g p-tert.-Butylphenol, 140 g Paraformaldehyd, 50 g Ameisensäure und 7 g 85 %ige Phosphorsäure werden 6 Stunden analog Beispiel 2 zur Reaktion gebracht. Nach Zugabe von 150 ml Isobutanol werden 0,9 kg des technischen Mehrkernphenolgemisches (enthaltend 52% Bisphenol A Isomer) eingetragen. Man läßt 1 1/2 Stunden unter Rückflußsieden reagieren und gibt ein Gemisch aus 150 g 30 %iger Formalinlösung und 30 g Propionaldehyd innerhalb von 20 Min. bei einer Heizbadtemperatur von 100°C ein, so daß das Reaktionsgemisch beständig siedet. Man läßt 1 1/2 Stunden unter intensivem Rühren bei 130°C Heizbadtemperatur reagieren, destilliert dann das Wasser azeotrop ab und verfährt wie in Beispiel 2 bezüglich der Aufarbeitung.

Das erhaltene Harz (1,45 kg) besitzt einen Erweichungspunkt von 85°C; OH-Zahl = 358, Jodzahl = 122.

Die Einarbeitung der Klebrigmacherharze in übliche Gummimischungen (vgl. Einarbeitungsbeispiele S. 14—16) erfolgt durch Zugabe einer abgewogenen Menge des als Paste, Pulver oder Granulat vorliegenden Klebrigmacherharzes gemeinsam mit den anderen benötigten Füllstoffen in die

Kautschukmischung. Eine Zugabe der Klebrigmacherharze am Ende des Mischzyklus kann ebenfalls ohne Beeinträchtigung der Klebrigkeitswirkung oder der Verarbeitungseigenschaften erfolgen. Jedoch soll darauf geachtet werden, daß bei der Einarbeitung von Klebrigmacherharzen, die in fester Form vorliegen, die Mischungstemperatur während der Verarbeitung den Schmelzbereich der Klebrigmacherharze möglichst überschreitet, um eine homogene Verteilung des Harzes in der Gummimischung zu gewährleisten.

Die Bewertung der Klebrigkeitswirkung erfolgt in Abwandlung der üblichen Prüfverfahren nach einer eigens entwickelten Methode. Hierbei wird mit einer konstanten Last gearbeitet (Prinzip eines Kriechversuches) und die zum Auseinanderziehen zweier Flächen erforderliche Zeit gemessen. Diese ist direkt proportional der Klebrigkeitswirkung und liefert unmittelbar eine Maßzahl für die Klebrigkeit.

Ausführung der Klebrigkeitsprüfung

(Eine ausführliche Beschreibung des Prüfverfahrens beinhaltet die Broschüre "Prüfung und Bewertung von Klebrigmachern" von E. Esch, Dr. H. Fries, H. Dahl, Dr. Th. Kempermann; Bayer AG, Sparte Kautschuk-Anwendungstechnik, Februar 1976). Die beiden Enden eines streifenförmigen Prüfkörpers mit den Maßen 150 x 20 x 2 mm, werden mit einer Oberfläche von 20 x 10 mm unter Aufbringen eines specifischen Druckes von 3,5 MPa während 30 s zusammengepreßt, nachdem der streifenförmige Prüfkörper mit seinen Enden ringförmig so zusammengelegt wurde, daß die beiden mit Gummimischung beschichteten Seiten aufeinanderliegen. Der so entstandene Ring wird über eine lose Rolle gelegt. Anschließend wird in die untere Beuge eine weitere bewegliche Rolle einegehängt, die mit unterschiedlichen Gewichten — wie in den Prüfbeispielen vermerkt — belastet werden kann. Nach dem Einhängen der Lastrolle wird die Zeit bis zur vollkommenen Lösung der miteinander varbundenen Kontaktflächen des Prüfkörpers bestimmt, die direkt proportional der Klebrigkeit, d.h. der Adhäsion der verklebten Kautschukteile, ist.

Herstellung der Gummimischungen und Prüfkörper: Die in den folgenden Beispielen genannten Mischungen, deren Konfectionsklebrigkeit gemessen werden soll, wurden nach der in der Gummiindustrie üblichen Mischweise und Mischfolge im Kneter gemischt, wobei die Klebrigmacherharze und Vulkanisationsbeschleuniger auf der Mischwalze nachgemischt wurden.

Die Prüfmischungen wurden zu Fellen von 1,2—1,3 mm Stärke ausgezogen, die Felle nach 24 Stunden Lagerung auf ein mit Polychloroprenkleber bestrichenes Baumwollgewebe (300 x 300 mm) gelegt und nach Abdeckung der Mischungsoberfläche mit Pausleinen sowie der Gewebeoberfläche mit Cellophan in einem Rahmen von 300 x 300 x 2 mm zwischen Stahlblechen in einer üblichen Etagenpresse bei 200 kp/cm$^2$ Betriebsdruck 5 Min. bei 110°C gepreßt. Aus den erhaltenen Platten wurden Prüfkörper von 150 x 20 mm gestanzt.

1 Stunde vor der Klebrigkeitsmessung (die Lagerungszeit der Prüfkörper hat keinen Einfluß auf die Klebrigkeit) wird das Pausleinen abgezogen und beide Enden des Prüfstreifens auf einer Fläche von 20 x 10 mm mit n-Hexan bestrichen. Nach einer Abdunstzeit von 5 Min. werden die Prüfkörper in der oben beschriebenen Weise zu einem Ring zusammengefügt und die Klebrigkeit gemessen.

Die folgenden Beispiele beinhalten die Beschreibung der Mischungen der Klebrigmacherharze mit den Elastomeren oder Elastomergemischen und eine Auflistung der Prüfbedingungen sowie die Ergebnisse der Klebrigkeitsprüfungen.

Beispiel 4

| | 4,1 | 4,2 | 4,3 | 4,4 | 4,5 |
|---|---|---|---|---|---|
| Buna Hüls 1712 | 103 | 103 | 103 | 103 | 103 |
| Buna CB 11 | 25 | 25 | 25 | 25 | 25 |
| Zinkoxid | 5 | 5 | 5 | 5 | 5 |
| Ruß N 220 | 75 | 75 | 75 | 75 | 75 |
| Aromatischer Mineralöl weichmacher | 12 | 12 | 12 | 12 | 12 |
| Stearinsäure | 2 | 2 | 2 | 2 | 2 |
| Schwefel | 1,8 | 1,8 | 1,8 | 1,8 | 1,8 |
| Benzothiazyl-2-cyclohexyl-sulfenamid | 1,2 | 1,2 | 1,2 | 1,2 | 1,2 |
| Acetylen/p-tert.-Butylphenol-Additionsprodukt* | — | 4 | — | — | — |
| Harz nach Beispiel 1 | — | — | 4 | — | — |
| Harz nach Beispiel 2 | — | — | — | 4 | — |
| Harz nach Beispiel 3 | — | — | — | — | 4 |

* (zum Vergleich) Handelsprodukt der Fa. BASF AG

Beispiel 5

| | 5,1 | 5,2 | 5,3 | 5,4 | 5,5 |
|---|---|---|---|---|---|
| Perbunan N 3307 NS | 100 | 100 | 100 | 100 | 100 |
| Ruß N 550 | 10 | 10 | 10 | 10 | 10 |
| Ruß N 762 | 40 | 40 | 40 | 40 | 40 |
| Mercaptobenzimidazol | 1 | 1 | 1 | 1 | 1 |
| Trimethyldihydrochinolin | 1 | 1 | 1 | 1 | 1 |
| Stearinsäure | 1 | 1 | 1 | 1 | 1 |
| Schwefel | 0,2 | 0,2 | 0,2 | 0,2 | 0,2 |
| Zinkoxid | 5 | 5 | 5 | 5 | 5 |
| Tetramethylthiuramidsulfid | 2,5 | 2,5 | 2,5 | 2,5 | 2,5 |
| Benzthiazyl-2-sulfenmorpholid | 2 | 2 | 2 | 2 | 2 |
| Esterweichmacher | 10 | 10 | 10 | 10 | 10 |
| Acetylen/p-tert.-Butylphenol-Additionsprodukt* | — | 4 | — | — | — |
| Harz nach Beispiel 1 | — | — | 4 | — | — |
| Harz nach Beispiel 2 | — | — | — | 4 | — |
| Harz nach Beispiel 3 | — | — | — | — | 4 |

* (zum Vergleich)

Beispiel 6

| | 6,1 | 6,2 | 6,3 | 6,4 | 6,5 |
|---|---|---|---|---|---|
| Buna AP 451 | 100 | 100 | 100 | 100 | 100 |
| Starinsäure | 1 | 1 | 1 | 1 | 1 |
| Ruß N 550 | 50 | 50 | 50 | 50 | 50 |
| Naphtenischer Mineralölweichmacher | 10 | 10 | 10 | 10 | 10 |
| Zinkoxid | 5 | 5 | 5 | 5 | 5 |
| Schwefel | 1,5 | 1,5 | 1,5 | 1,5 | 1,5 |
| Mercaptobenzthiazol | 0,5 | 0,5 | 0,5 | 0,5 | 0,5 |
| Tetramethylthiuramdisulfid | 1,5 | 1,5 | 1,5 | 1,5 | 1,5 |
| Acetylen/p-tert.-Butylphenol-Additionsprodukt* | — | 5 | — | — | — |
| Harz nach Beispiel 1 | — | — | 5 | — | — |
| Harz nach Beispiel 2 | — | — | — | 5 | — |
| Harz nach Beispiel 3 | — | — | — | — | 5 |

* (zum Vergleich)

Prüfbedingungen und Prüfergebnisse

*zu Beispiel 4:*

Anpreßdruck beim Zusammenfügen der Prüfkörperenden: 3,5 MPa
Anpreßzeit „ „ „ „ : 30 sec.
Abzugsgewicht zur Trennung der Prüfkörperflächen: 12,5 N

Ergebnisse:

| Beispiel | Trennzeit (sec.) |
|---|---|
| 4.1 | 35 |
| 4.2 | 61 |
| 4.3 | 100 |
| 4.4 | 98 |
| 4.5 | 108 |

Die Prüfergebnisse stellen die Mittelwerte von 5 Versuchsläufen dar.

*zu Beispiel 5:*

Anpreßdruck beim Zusammenfügen der Prüfkörperenden: 3,5 MPa
Anpreßzeit „ „ „ „ : 5 sec.
Abzugsgewicht zur Trennung der Prüfkörperflächen: 15 N

Ergebnisse:

| Beispiel | Trennzeit (sec.) |
|---|---|
| 5.1 | 170 |
| 5.2 | 195 |
| 5.3 | 244 |
| 5.4 | 246 |
| 5.5 | 235 |

Die Prüfergebnisse stellen die Mittelwerte von 5 Versuchsläufen dar.

*zu Beispiel 6:*

| | | |
|---|---|---|
| Anpreßdruck beim Zusammenfügen der Prüfkörperenden: | 3,5 | MPa |
| Anpreßzeit „ „ „ „ : | 30 | sec. |
| Abzugsgewicht zur Trennung der Prüfkörperflächen: | 12,5 | N |

Ergebnisse:

| Beispiel | Trennzeit (sec.) |
|---|---|
| 6.1 | 59 |
| 6.2 | 22 |
| 6.3 | 85 |
| 6.4 | 85 |
| 6.5 | 88 |

Dei Prüfergebnisse stellen die Mittelwerte von 5 Versuchsläufen dar.

## Patentansprüche

1. Harze mit einem Erweichungspunkt von 50 bis 130°C, einer OH-Zahl von 250 bis 400 und einer Jodzahl von 90 bis 160 erhältlich durch Umsetzung eines Alkylphenol-Formaldehyd-Novolaks oder eines Alkylphenolgemisch-Formaldehyd-Novolaks unter sauer katalytischen Bedingungen mit einem Mehrkernphenol oder Mehrkernphenolgemisch und 0,1 bis 0,6 Mol Formaldehyd und/oder einem aliphatischen Aldehyd oder aliphatischen Aldehydgemisch pro Mol phenolischer OH-Gruppen des Mehrkernphenols, wobei das Gewichtsverhältnis von Alkylphenol oder Alkylphenolgemisch zu Mehrkernphenol bzw. Mehrkernphenolgemisch 1,5: 1 bis 1:4 beträgt.

2. Harze gemäß Anspruch 1 mit einem Erweichungspunkt von 75—100°C, einer OH-Zahl von 270—370 und einer Jodzahl von 110 bis 140.

3. Harz gemäß Anspruch 1 und 2, dadurch gekennzeichnet, daß der bei der Umsetzung als Ausgangsprodukt eingesetzte Alkylphenol-Formaldehyd-Novolak hergestellt wurde durch Reaktion von Alkylphenolen oder Alkylphenolgemischen mit einem geradkettigen oder verzweigten o- und/oder p-ständigen Alkyl- oder Cycloalkylrest mit 3—20 Kohlenstoffatomen, und mit 1—2 Mol Formaldehyd pro Mol Alkylphenol.

4. Harz gemäß Ansprüchen 1 und 2, dadurch gekennzeichnet, daß als Mehrkernphenol
4,4-Dihydroxydiphenyl
2,2-Bis-(4-hydroxyphenyl)-propan
2,2-Bis-(4-hydroxy-phenyl)-butan
1,1-Bis-(4-hydroxy-phenyl)-cyclohexan und/oder
Bis-(4-hydroxy-phenyl)-p-diisopropylbenzol
eingesetzt wird.

5. Verfahren zur Herstellung der Harze gemäß Ansprüchen 1 bis 4, dadurch gekennzeichnet, daß man ein Alkylphenol-Formaldehyd-Novolak oder ein Alkylphenolgemisch-Formaldehyd-Novolak unter sauer-katalytischen Bedingungen mit einem Mehrkernphenol oder Mehrkernphenolgemisch und 0,1 bis 0,6 Mol Formaldehyd und/oder einem aliphatischen Aldehyd oder aliphatischen Aldehydgemisch pro Mol phenolischer OH-Gruppen des Mehrkernphenols umsetzt, wobei das Gewichtsverhältnis von Alkylphenol oder Alkylphenolgemisch zu Mehrkernphenol bzw. Mehrkernphenolgemisch 1,5:1 bis 1:4 beträgt.

6. Verfahren nach Anspruch 5, dadurch gekennzeichnet, daß der Alkylphenol-Formaldehyd-Novolak hergestellt worden ist durch Umsetzung von Alkylphenol mit einer 1 bis 2fach molaren Menge Formaldehyd in Gegenwart saurer Katalysatoren bei Temperaturen von 100 bis 180°C.

7. Verwendung der Harze gemäß Ansprüche 1 bis 4 als Klebrigmacher zur Herstellung von aneinanderhaftenden Kautschukmischungen.

## Claims

1. Resins having a softening point of from 50 to 130°C, an OH-number of from 250 to 400 and an iodine number of from 90 to 160, obtainable by reacting an alkyl phenol-formaldehyde novolak or an alkyl phenol mixture-formaldehyde novolak under acid-catalysed conditions with a polynuclear phenol or polynuclear phenol mixture and 0.1 to 0.6 moles of formaldehyde and/or an aliphatic aldehyde or aliphatic aldehyde mixture per mole of phenolic OH groups in the polynuclear phenol, the ratio by weight of the alkyl phenol or alkyl phenol mixture to the polynuclear phenol or polynuclear phenol mixture being from 1.5:1 to 1:4.

2. Resins according to Claim 1 having a softening point of from 75 to 100°C, an OH-number of from 270 to 370 and an iodine number of from 110 to 140.

3. A resin according to Claims 1 and 2, characterised in that the alkyl phenol-formaldehyde

novolak used as starting material for the reaction is produced by reacting alkyl phenols or mixtures of alkyl phenols, which have a straight-chain or branched-chain alkyl or cycloalkyl radical with 3 to 20 carbon atoms in the *o*- and/or *p*-position, with from 1 to 2 moles of formaldehyde per mole of alkyl phenol.

4. A resin according to Claims 1 and 2, characterised in that the polynuclear phenol used is 4,4-dihydroxydiphenyl, 2,2-bis-(4-hydroxyphenyl)-propane, 2,2-bis-(4-hydroxyphenyl)-butane, 1,1-bis-(4-hydroxyphenyl)-cyclohexane and/or bis-(4-hydroxyphenyl)-*p*-diisopropyl benzene.

5. A process for producing the resins according to Claims 1 to 4, characterised in that an alkyl phenol-formaldehyde novolak or an alkyl phenol mixture-formaldehyde novolak is reacted under acid-catalysed conditions with a polynuclear phenol or polynuclear phenol mixture and 0.1 to 0.6 moles of formaldehyde and/or an aliphatic aldehyde or aliphatic aldehyde mixture per mole of phenolic OH groups in the polynuclear phenol, the ratio by weight of the alkyl phenol or alkyl phenol mixture to the polynuclear phenol or polynuclear phenol mixture being from 1.5:1 to 1:4.

6. A process according to Claim 5, characterised in that the alkyl phenol-formaldehyde novolak is produced by reacting an alkyl phenol with once to twice the molar quantity of formaldehyde in the presence of acid catalysts at temperatures of from 100 to 180°C.

7. The use of the resins according to Claims 1 to 4 as tackifiers for the production of rubber mixtures adhering to one another.

**Revendications**

1. Résines ayant un point de ramollissement de 50 à 130°C, un indice OH de 250 à 400 et un indice d'iode de 90 à 160, que l'on peut obtenir par réaction d'une novolaque alcoylphénol-formaldéhyde ou d'une novolaque d'un mélange d'alcoylphénols-formaldéhyde dans des conditions catalytiques acides avec un phénol polynucléaire ou mélange de phénols polynucléaires et 0,1 à 0,6 mole de formaldéhyde et/ou d'une aldéhyde aliphatique ou mélange d'aldéhydes aliphatiques par mole de groupes OH phénoliques du phénol polynucléaire, le rapport pondéral de l'alcoylphénol ou mélange d'alcoylphénols au phénol polynucléaire ou mélange de phénols polynucléaires étant de 1,5:1 à 1:4.

2. Résines selon la revendication 1 ayant un point de ramollissement de 75 à 100°C, un indice OH de 270—370 et un indice d'iode de 110 à 140.

3. Résine selon l'une quelconque des revendications 1 et 2, caractérisée en ce que la novolaque d'alcoylphénol-formaldéhyde employée dans la réaction comme produit de départ a été préparée par réaction d'alcoylphénols ou de mélanges d'alcoylphénols ayant un radical alcoyle à chaîne droite un ramifiée ou cycloalcoyle en position ortho et/ou para et ayant 3 à 20 atomes de carbone, avec 1 à 2 moles de formaldéhyde par mole d'alcoylphénol.

4. Résine selon l'une quelconque des revendications 1 et 2, caractérisée en ce qu'on utilise comme phénol polynucléaire du
4,4-dihydroxydiphényle,
2,2-bis-(4-hydroxyphényl)-propane,
2,2-bis-(4-hydroxyphényl)-butane,
1,1-bis-(4-hydroxyphényl)-cyclohexane et/ou du
bis-(4-hydroxyphényl)-p-diisopropylbenzène.

5. Procédé de fabrication des résines selon l'une quelconque des revendications 1 à 4, caractérisé en ce qu'on fait réagir une novolaque alcoylphénol-formaldéhyde ou une novolaque d'un mélange d'alcoylphénols-formaldéhyde dans des conditions catalytiques acides avec un phénol polynucléaire ou mélange de phénols polynucléaires et 0,1 à 0,6 mole de formaldéhyde et/ou d'une aldéhyde aliphatique ou d'un mélange d'aldéhydes aliphatiques par mole de groupes OH phénoliques du phénol polynucléaire, le rapport pondéral de l'alcoylphénol ou mélange d'alcoylphénols au phénol polynucléaire ou mélange de phénols polynucléaires étant de 1,5:1 à 1:4.

6. Procédé selon la revendication 5, caractérisé en ce que la novolaque d'alcoylphénol-formaldéhyde a été préparée par réaction d'un alcoylphénol avec une quantité 1 à 2 fois molaire de formaldéhyde en présence de catalyseurs acides à des températures de 100 à 180°C.

7. Utilisation des résines selon l'une quelconque des revendications 1 à 4 comme agent apportant du collant pour la fabrication de mélanges caoutchouteux qui adhèrent les uns aux autres.